# EUROPEAN PATENT SPECIFICATION

(11) **EP 1 473 786 B1**
(45) Date of publication and mention of the grant of the patent: **10.08.2016**
(21) Application number: 03445051.0
(22) Date of filing: 29.04.2003
(51) Int. Cl.: H01M 2/10, H01M 2/20

(54) **Battery for electronic devices**
Batterie für ein elektronisches Gerät
Batterie pour un dispositif électronique

(43) Date of publication of application: 03.11.2004
(73) Proprietor: Sony Mobile Communications Inc., Shinagawa-ku Tokyo 140-0002 (JP)
(72) Inventor: L'Estrade, Christian, 252 49 Helsingborg (SE); Kalogeropoulos, Sarandis, 211 54 Malmö (SE); Svensson, Jan-Olof, 261 63 Glumslöv (SE); Wolf, Mats, 247 35 Södra Sandby (SE)
(74) Representative: Neij & Lindberg AB

(56) References cited:
- DE-A- 19 714 953
- US-B1- 6 175 213
- US-B1- 6 218 041
- US-B1- 6 377 025
- PATENT ABSTRACTS OF JAPAN vol. 1995, no. 11, 26 December 1995 (1995-12-26) & JP 07 220700 A (SANYO ELECTRIC CO LTD), 18 August 1995 (1995-08-18)

## Description

### Field of the invention

The present invention relates to electric batteries, usable for storing and supplying electrical energy, such as rechargeable batteries. In particular, the invention relates to the encapsulation of a battery cell in a battery housing.

### Background

All electronic equipment needs a power supply, for providing electrical energy. Many electronic devices include or are connectable to a battery for power supply, thus being devised to be portable or at least independent of an electric mains outlet. In particular the ever increasing development of portable computers and radio communication devices has led to, and also been dependent on, a corresponding development in battery technology. In recent years, Lithium-based battery cells have started finding application as the batteries demonstrating higher performance than e.g. the nickel-metal hydride batteries. Lithium-based secondary battery cells have a high energy density, and have therefore widely become used in order to increase the battery usable or operable time. In particular, Lithium-based battery cells have been found useful in portable electronic devices, such as mobile phones, laptop computers and personal digital assistants PDAs. An example of such a lithium-based battery cell is a lithium-ion cell, and another lithium-based battery type having an even higher energy density is the lithium-polymer battery.

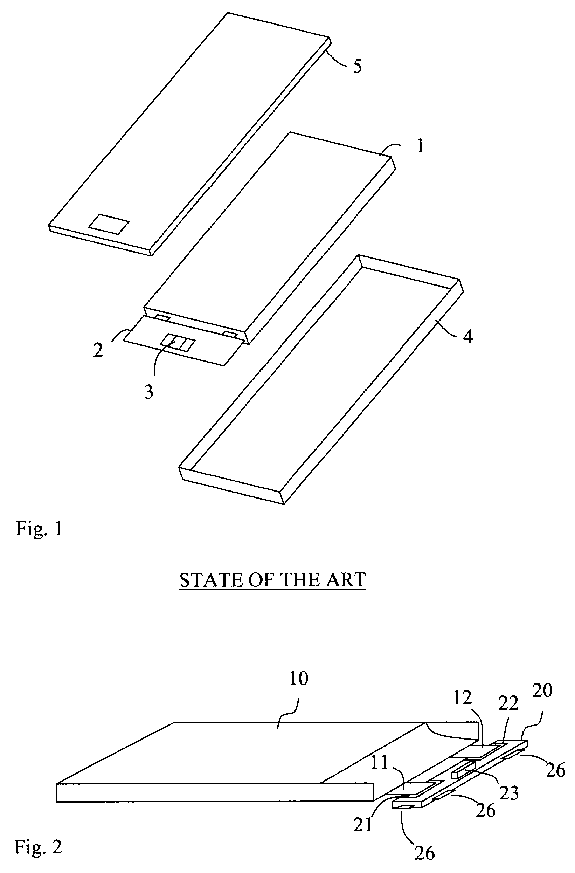

A typical battery of today is schematically illustrated in Fig. 1, and comprises four significant parts: a battery cell 1, a printed wire board PWB 2 connected to battery cell 1, a box 4 for housing battery cell 1 and PWB 2, and a lid 5 for closing said box 3, said box 4 and lid 5 forming a battery housing. An aperture is formed in the housing, in the illustrated battery in lid 5, for providing access to connection poles 3 on PWB 2. The housing members 4,5 are generally made from an insulating material, such as plastic. When attached to an electronic device, such as a mobile phone, battery contacts on the device will apply pressure on the PWB in the battery for securing electrical contact, which requires hooks on the battery lid to keep the PWB in position. During assembly, the PWB has to be inserted into these hooks, which implies some accuracy and complexity in both manufacture and assembly.

In the development of portable electronic equipment and batteries therefore, there is a constant strive to improve cost, either by making a construction that is easier to produce, by decreasing the number of components and thereby the time for assembly, or by introducing cheaper components or materials. In certain types of electronic devices, the battery makes up for a large part of the volume and weight of the device, such as in a mobile phone. Since both price, small size and light weight are desirable features for the consumer, there are always improvements to be made in battery technology.

### Summary of the invention

Hence, it is an object of the present invention to provide a more cost-efficient battery design compared to the state of the art. This object is fulfilled by a battery as defined in the independent claim 1.

The object is fulfilled by a battery for storing electric energy, comprising a battery cell, a battery interface unit attached to said battery cell, and a housing for said battery cell, wherein said interface unit forms part of said housing, said housing comprises a box member into which said battery cell is placed, said interface unit constituting a complementary wall to said box member and said box member is substantially flat with an open side wall, said interface unit being devised to close said open side wall.

Said box member may be substantially elongated, wherein said open side wall is a shorter side of the box member.

Preferably, said battery interface unit is connected to pole tabs at a shorter side of said battery cell.

In one embodiment, said battery cell extends along a plane at a substantially right angle to said interface unit.

Advantageously, said interface unit is connected to said battery cell to extend along a substantially common plane with said battery cell, and in that said interface unit is folded at said pole tabs to a substantially right angle to said battery cell.

Preferably, said battery interface unit carries interface poles connected to said battery cell, which interface poles are arranged on an outwards facing side of said battery.

In one embodiment, cooperating wall attachment means are provided on said box member adjacent to said open wall, and at a perimeter portion of said battery interface unit.

Preferably, said cooperating wall attachment means are devised to latch-lock said battery interface unit to said box member.

Alternatively, said battery interface unit is welded to said box member.

In another alternative embodiment, said battery interface unit is soldered to said box member.

In yet another alternative embodiment, said battery interface unit is glued to said box member.

In one embodiment, a seal is arranged at a joint between said box member and said battery interface unit.

Preferably, said battery interface unit is welded to said pole tabs.

In one embodiment, said battery interface unit is a printed wire board.

Said printed wire board preferably carries electronic circuits for monitoring said battery cell.

In a preferred embodiment, said battery cell is rechargeable.

Alternatively, said battery cell is non-rechargeable.

The battery cell may be a lithium-based cell.

According to a second aspect, the invention fulfils the stated object by providing a battery interface unit, for use in a battery according to any of the features above.

### Brief description of the drawings

The present invention will now be described in more detail with reference to preferred embodiments, given only by way of example and illustrated in the accompanying drawings, in which:
Fig. 1 schematically illustrates an example of a disassembled state of the art battery;
Fig. 2 illustrates a battery cell and a battery interface unit connected thereto in accordance with a preferred embodiment of the present invention;
Fig. 3 illustrates a preferred embodiment of a disassembled battery according to the present invention;
Fig. 4 illustrates the battery of Fig. 3 when the battery cell has been placed in the battery housing; and
Fig. 5 illustrates the completely assembled battery of Fig. 3.

### Detailed description of preferred embodiments

The present description refers to battery cells for use with electronic equipment, such as communication or data processing terminals. One type of communication terminal for which the invention is suitable is portable radio communication terminals, such as mobile phones. However, the invention is applicable to many types of electronic devices, particularly portable electronic devices, such as pagers, communicators, electronic organisers, smartphones, PDA:s (Personal Digital Assistants), laptop computers, and so on. Furthermore, it should be emphasised that the term comprising or comprises, when used in this description and in the appended claims to indicate included features, elements or steps, is in no way to be interpreted as excluding the presence of other features elements or steps than those expressly stated.

Fig. 2 illustrates a battery cell 10, and a battery interface unit 20 connected thereto, which constitute elements of a preferred embodiment of the invention. The particular type of the battery cell 10 is not crucial for the present invention. Battery cell 10 may e.g. be a nickel-cadmium or nickel - metal hydride type cell, or a lithium-based battery cell, such as a lithium-ion or lithium polymer cell. The battery cell 10 is in this preferred embodiment shaped as a substantially flat and elongated package, and two battery poles 11 and 12 of battery cell 10 project from a short end of the flat battery cell 10. Poles 11 and 12 are preferably devised as thin and flexible metal tabs, in an exemplary embodiment each having a width of about 2 - 4 mm and extending about twice as long from the short end of battery cell 10. The battery interface unit 20 is attached to tabs 11,12, preferably by means of ultrasonic welding, to tab connector pads 21,22 on the battery interface unit 20. The battery interface unit 20 preferably comprises a PWB with integrated wires in one or plural layers. The PWB may support battery circuits 23, including security electronics for detecting and monitoring the cell temperature, and identification means. Battery circuits 23 are connected to tab connector pads 21,22 through the PWB. The battery interface unit 20 further includes interface poles 24,25 for accessing the battery cell, as will be described further down. In the illustrated embodiment the interface poles 24,25 are arranged on an opposite side of interface unit 20, compared to the side carrying the tab connector pads 21,22. In an alternative embodiment the interface poles 24,25 and the tab connector pads 21,22 are arranged on the same side of PWB. However, the illustrated embodiment adds some design flexibility since the interface poles 24,25 may be designed and placed on the PWB without having to take the design of tabs 11,12 into consideration. The interface unit 20 is further devised with attachment means 26, for mechanically securing it in a battery housing. In the illustrated embodiment, the attachment means 26 of interface unit 20 comprises protrusions on one or more edges of the PWB. Other embodiments are plausible, though, such as an adhesive.

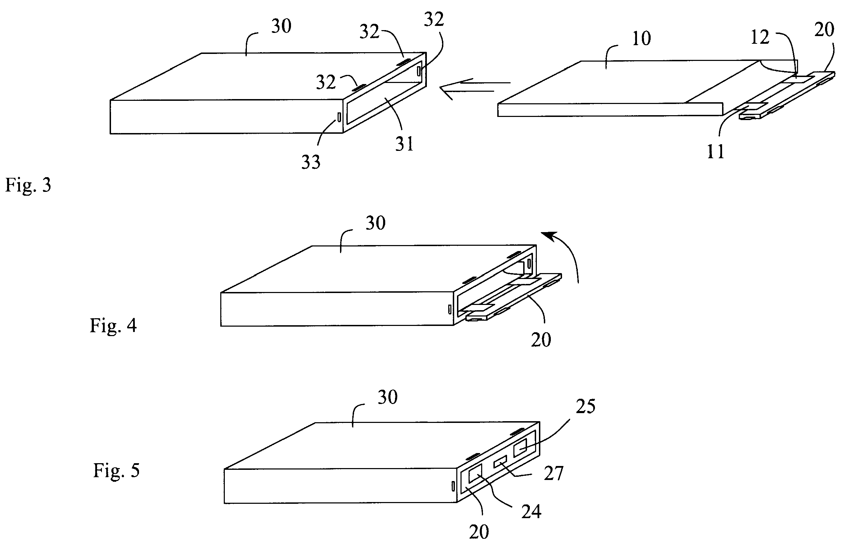

Fig. 3 illustrates a preferred embodiment of a battery according to the present invention, in a disassembled state, with the connected battery cell 10 and interface unit 20 to the right, and a box member 30 forming a battery housing to the left. For the sake of clarity, all details of Fig. 2 are not included in Figs 3 and 4. However, tabs 11 and 12, as well as attachment means 26, are visible. In the illustrated embodiment, box member 30 is substantially flat an slightly elongated, with walls covering all sides but one short end side 31. In alternative embodiments, another wall member may instead be open, such as a longer side edge or one of the surfaces. Preferably, box member 30 is made as an integrated piece of plastic. However, in alternative embodiments the box member 30 may be formed in another material, such as metal, e.g. aluminium. Attachment means 32 are formed adjacent to open wall 31, and are devised for cooperation with attachment means 26 on the interface unit 20, such that interface unit 20 forms a complementary wall to box member 30. In the illustrated embodiment, the attachment means 32 on box member 30 comprises recesses 32 in the walls of box member 30, for receiving protrusions 26, as will be described. In an alternative embodiment using adhesive attachment, box member 30 would e.g. be devised with attachment means in the form of a shoulder portion for adhering to a perimeter portion of interface unit 20. As is illustrated by the arrow in Fig. 3, battery cell 10 is placed in box member 30 by introduction through the open wall 31.

Fig. 4 illustrates the battery when battery cell 10 is completely introduced in the housing of box member 30. In this state, interface unit 20 and parts of tabs 11 and 12 project outside box member 30 through open wall 31. The housing is finally closed by folding the PWB 20 about 90° to its predestined position, thereby bending tabs 11,12, as is indicated by the arrow of Fig. 4.

Fig. 5 illustrates the fully assembled uniform battery. Interface unit 20 is attached to box member 30 by latching protrusions 26 into engagement with recesses 32. In this drawing, interface poles 24 and 25 for electrically accessing the poles of battery cell 10, are clearly visible. Furthermore, an auxiliary pole 27 for reading from or communicating with battery circuits 23 are also devised on this side of interface unit 20. The joint between interface unit 20 and box member 30 may include a seal for protecting the battery cell 10 from dust and moisture, such as an o-ring seal. Alternatively, the seal may be devised as a wrap label attached to cover the joint after joining interface unit 20 with box member 30.

The foregoing has described the principles, preferred embodiments and modes of operation of the present invention. The present invention introduces a new function in the PWB, by letting it also be the lid for the battery housing, which enables cost savings. The battery according to the invention is e.g. used for radio communication terminals. However, the invention should not be construed as being limited to the particular embodiments discussed above, which should be regarded as illustrative rather than restrictive. For one thing, the described exemplary embodiment could easily be modified to include plural battery cells in a single box member. It should therefore be appreciated that variations may be made in those embodiments by workers skilled in the art without departing from the scope of the present invention, as defined by the following claims.

## Claims

1. Battery for storing electric energy, comprising:
a battery cell (10),
a battery interface unit (20) attached to said battery cell, and
a housing (30,20) comprising a substantially flat box member (30) with an open side wall (31) for introducing said battery cell (10) into the substantially flat box member (30) through said open side wall (31),
**characterised in that** said interface unit (20) is devised to close said open side wall (31) when the battery cell (10) is placed into the substantially flat box member (30), said interface unit (20) thereby forming a complementary wall to said substantially flat box member (30) and forming part of said housing (20, 30).

2. The battery as recited in claim 1, **characterised in that** said substantially flat box member (30) is substantially elongated, and said open side wall is a shorter side of the substantially flat box member (30).

3. The battery as recited in claim 2, **characterised in that** said battery interface unit (20) is connected to pole tabs (11,12) at a shorter side of said battery cell (10).

4. The battery as recited in claim 2 and 3, **characterised in that** said battery cell (10) extends along a plane at a substantially right angle to said interface unit (20).

5. The battery as recited in claim 2 and 3, **characterised in that** said interface unit (20) is connected to said battery cell (10) to extend along a substantially common plane with said battery cell (10), and **in that** said interface unit (20) is folded at said pole tabs (11,12) to a substantially right angle to said battery cell (10).

6. The battery as recited in claim 4 or 5, **characterised in that** said battery interface unit (20) carries interface poles (24,25) connected to said battery cell (10), which interface poles (24,25) are arranged on an outwards facing side of said battery.

7. The battery as recited in claim 4 or 5, **characterised in that** cooperating wall attachment means (26,32) are provided on said substantially flat box member (30) adjacent to said open wall (31), and at a perimeter portion of said battery interface unit (20).

8. The battery as recited in claim 7, **characterised in that** said cooperating wall attachment means (26, 32) are devised to latch-lock said battery interface unit (20) to said substantially flat box member (30).

9. The battery as recited in claim 7, **characterised in that** said battery interface unit is welded to said substantially flat box member (30).

10. The battery as recited in claim 7, **characterised in that** said battery interface unit (20) is soldered to said substantially flat box member (30).

11. The battery as recited in claim 7, **characterised in that** said battery interface unit (20) is glued to said substantially flat box member (30).

12. The battery as recited in claim 4 or 5, **characterised in that** a seal is arranged at a joint between said substantially flat box member (30) and said battery interface unit (20).

13. The battery as recited in claim 3, **characterised in that** said battery interface unit is welded to said pole tabs (11,12).

14. The battery as recited in any of the preceding claims, **characterised in that** said battery interface unit (20) is a printed wire board.

15. The battery as recited in claim 14, **characterised in that** said printed wire board carries electronic circuits (23) for monitoring said battery cell.

16. The battery as recited in any of the preceding claims, **characterised in that** said battery cell is rechargeable.

17. The battery as recited in any of the preceding claims, **characterised in that** said battery cell is non-rechargeable.

18. The battery as recited in claim 16, **characterised in that** said battery cell is a lithium-based cell.

## Patentansprüche

1. Batterie zum Speichern von elektrischer Energie, welche Folgendes umfasst:
eine Batteriezelle (10),
eine Batterieschnittstelleneinheit (20), die an der Batteriezelle angebracht ist, und
ein Gehäuse (30, 20), das ein im Wesentlichen flaches Kastenelement (30) mit einer offenen Seitenwand (31) zum Einbringen der Batteriezelle (10) in das im Wesentlichen flache Kastenelement (30) durch die offene Seitenwand (31) umfasst,
**dadurch gekennzeichnet, dass** die Schnittstelleneinheit (20) dafür ausgelegt ist, die offene Seitenwand (31) zu schließen, wenn die Batteriezelle (10) in das im Wesentlichen flache Kastenelement (30) gelegt wird, wobei die Schnittstelleneinheit (20) dabei eine komplementäre Wand zu dem im Wesentlichen flachen Kastenelement (30) bildet und einen Teil des Gehäuses (20, 30) bildet.

2. Batterie nach Anspruch 1, **dadurch gekennzeichnet, dass** das im Wesentlichen flache Kastenelement (30) im Wesentlichen lang gestreckt ist und dass die offene Seitenwand eine kürzere Seite des im Wesentlichen flachen Kastenelements (30) ist.

3. Batterie nach Anspruch 2, **dadurch gekennzeichnet, dass** die Batterieschnittstelleneinheit (20) mit Pollaschen (11, 12) an einer kürzeren Seite der Batteriezelle (10) verbunden ist.

4. Batterie nach Anspruch 2 und 3, **dadurch gekennzeichnet, dass** sich die Batteriezelle (10) unter einem im Wesentlichen rechten Winkel zur Schnittstelleneinheit (20) entlang einer Ebene erstreckt.

5. Batterie nach Anspruch 2 und 3, **dadurch gekennzeichnet, dass** die Schnittstelleneinheit (20) mit der Batteriezelle (10) verbunden ist, so dass sie sich entlang einer im Wesentlichen gemeinsamen Ebene mit der Batteriezelle (10) erstreckt, und dass die Schnittstelleneinheit (20) an den Pollaschen (11, 12) unter einem im Wesentlichen rechten Winkel zur Batteriezelle (10) gefaltet ist.

6. Batterie nach Anspruch 4 oder 5, **dadurch gekennzeichnet, dass** die Batterieschnittstelleneinheit (20) Schnittstellenpole (24, 25) trägt, die mit der Batteriezelle (10) verbunden sind, wobei die Schnittstellenpole (24, 25) auf einer nach außen weisenden Seite der Batterie angeordnet sind.

7. Batterie nach Anspruch 4 oder 5, **dadurch gekennzeichnet, dass** die zusammenwirkenden Wandanbringungsmittel (26, 32) an dem im Wesentlichen flachen Kastenelement (30) angrenzend an die offene Wand (31) und an einem Umfangsabschnitt der Batterieschnittstelleneinheit (20) bereitgestellt sind.

8. Batterie nach Anspruch 7, **dadurch gekennzeichnet, dass** die zusammenwirkenden Wandanbringungsmittel (26, 32) dafür ausgelegt sind, die Batterieschnittstelleneinheit (20) durch einen Verriegelungsverschluss an dem im Wesentlichen flachen Kastenelement (30) zu befestigen.

9. Batterie nach Anspruch 7, **dadurch gekennzeichnet, dass** die Batterieschnittstelleneinheit an das im Wesentlichen flache Kastenelement (30) geschweißt ist.

10. Batterie nach Anspruch 7, **dadurch gekennzeichnet, dass** die Batterieschnittstelleneinheit (20) an das im Wesentlichen flache Kastenelement (30) gelötet ist.

11. Batterie nach Anspruch 7, **dadurch gekennzeichnet, dass** die Batterieschnittstelleneinheit (20) an das im Wesentlichen flache Kastenelement (30) geklebt ist.

12. Batterie nach Anspruch 4 oder 5, **dadurch gekennzeichnet, dass** eine Dichtung an einer Verbindungsstelle zwischen dem im Wesentlichen flachen Kastenelement (30) und der Batterieschnittstelleneinheit (20) angeordnet ist.

13. Batterie nach Anspruch 3, **dadurch gekennzeichnet, dass** die Batterieschnittstelleneinheit an die Pollaschen (11, 12) geschweißt ist.

14. Batterie nach einem der vorhergehenden Ansprüche, **dadurch gekennzeichnet, dass** die Batterieschnittstelleneinheit (20) eine gedruckte Drahtplatine ist.

15. Batterie nach Anspruch 14, **dadurch gekennzeichnet, dass** die gedruckte Drahtplatine elektronische Schaltungen (23) zur Überwachung der Batteriezelle trägt.

16. Batterie nach einem der vorhergehenden Ansprüche, **dadurch gekennzeichnet, dass** die Batteriezelle wiederaufladbar ist.

17. Batterie nach einem der vorhergehenden Ansprüche, **dadurch gekennzeichnet, dass** die Batteriezelle nicht wiederaufladbar ist.

18. Batterie nach Anspruch 16, **dadurch gekennzeichnet, dass** die Batteriezelle eine lithiumbasierte Zelle ist.

## Revendications

1. Batterie de stockage d'énergie électrique, comprenant :
une cellule de batterie (10),
une unité d'interface de batterie (20) fixée à ladite cellule de batterie, et
un boîtier (30,20) comprenant un élément de boîtier sensiblement plat (30) avec une paroi latérale ouverte (31) pour introduire ladite cellule de batterie (10) dans l'élément de boîtier sensiblement plat (30) à travers ladite paroi latérale ouverte (31),
**caractérisée en ce que** ladite unité d'interface (20) est conçue pour fermer ladite paroi latérale ouverte (31) lorsque la cellule de batterie (10) est placée dans l'élément de boîtier sensiblement plat (30), ladite unité d'interface (20) formant ainsi une paroi complémentaire dudit élément de boîtier sensiblement plat (30) et faisant partie intégrante dudit boîtier (20, 30).

2. Batterie selon la revendication 1, **caractérisée en ce que** ledit élément de boîtier sensiblement plat (30) est sensiblement allongé, et ladite paroi latérale ouverte est un plus petit côté de l'élément de boîtier sensiblement plat (30).

3. Batterie selon la revendication 2, **caractérisée en ce que** ladite unité d'interface de batterie (20) est reliée à des pattes polaires (11,12) sur un plus petit côté de ladite cellule de batterie (10).

4. Batterie selon la revendication 2 ou 3, **caractérisée en ce que** ladite cellule de batterie (10) s'étend le long d'un plan à un angle sensiblement droit par rapport à ladite unité d'interface (20).

5. Batterie selon la revendication 2 ou 3, **caractérisée en ce que** ladite unité d'interface (20) est reliée à ladite cellule de batterie (10) pour s'étendre le long d'un plan sensiblement commun avec ladite cellule de batterie (10), et **en ce que** ladite unité d'interface (20) est pliée au niveau desdites pattes polaires (11,12) à un angle sensiblement droit par rapport à ladite cellule de batterie (10).

6. Batterie selon la revendication 4 ou 5, **caractérisée en ce que** ladite unité d'interface de batterie (20) comporte des pôles d'interface (24,25) reliés à ladite cellule de batterie (10), lesquels pôles d'interface (24,25) sont agencés sur un côté tourné vers l'extérieur de ladite batterie.

7. Batterie selon la revendication 4 ou 5, **caractérisée en ce que** des moyens de fixation de paroi coopérants (26,32) sont prévus sur ledit élément de boîtier sensiblement plat (30) de manière adjacente à ladite paroi ouverte (31) et au niveau d'une partie de périmètre de ladite unité d'interface de batterie (20).

8. Batterie selon la revendication 7, **caractérisée en ce que** lesdits moyens de fixation de paroi coopérants (26, 32) sont conçus pour verrouiller ladite unité d'interface de batterie (20) avec ledit élément de boîtier sensiblement plat (30).

9. Batterie selon la revendication 7, **caractérisée en ce que** ladite unité d'interface de batterie est soudée audit élément de boîtier sensiblement plat (30).

10. Batterie selon la revendication 7, **caractérisée en ce que** ladite unité d'interface de batterie (20) est brasée sur ledit élément de boîtier sensiblement plat (30).

11. Batterie selon la revendication 7, **caractérisée en ce que** ladite unité d'interface de batterie (20) est collée audit élément de boîtier sensiblement plat (30).

12. Batterie selon la revendication 4 ou 5, **caractérisée en ce qu'**un joint d'étanchéité est agencé au niveau d'une jonction entre ledit élément de boîtier sensiblement plat (30) et ladite unité d'interface de batterie (20).

13. Batterie selon la revendication 3, **caractérisée en ce que** ladite unité d'interface de batterie est soudée auxdites pattes polaires (11,12).

14. Batterie selon l'une quelconque des revendications précédentes, **caractérisée en ce que** ladite unité d'interface de batterie (20) est une carte de circuit imprimé.

15. Batterie selon la revendication 14, **caractérisée en ce que** ladite carte de circuit imprimé comporte des circuits électroniques (23) pour la surveillance de ladite cellule de batterie.

16. Batterie selon l'une quelconque des revendications précédentes, **caractérisée en ce que** ladite cellule de batterie est rechargeable.

17. Batterie selon l'une quelconque des revendications précédentes, **caractérisée en ce que** ladite cellule de batterie est non rechargeable.

18. Batterie selon la revendication 16, **caractérisée en ce que** ladite cellule de batterie est une cellule au lithium.
